# EUROPÄISCHE PATENTSCHRIFT

(11) **EP 0 530 228 B1**
(45) Veröffentlichungstag und Bekanntmachung des Hinweises auf die Patenterteilung: **20.04.1994**
(21) Anmeldenummer: 91909025.8
(22) Anmeldetag: 10.05.1991
(51) Int. Cl.: B09B 3/00

(54) **VERFAHREN UND VORRICHTUNG ZUR ENTSORGUNG VON EMBALLAGEN**
PROCESS AND DEVICE FOR DISPOSING OF PACKINGS
PROCEDE ET DISPOSITIF D'ELIMINATION D'EMBALLAGES

(30) Priorität: 30.05.1990 DE 4017319
(43) Veröffentlichungstag der Anmeldung: 10.03.1993
(73) Patentinhaber: BASF Lacke + Farben AG, 48165 Münster-Hiltrup (DE)
(72) Erfinder: BÜRGER, Alfred, D-4408 Dülmen (DE)
(74) Vertreter: Münch, Volker, Dr.
(86) Internationale Anmeldenummer: EP9100872
(87) Internationale Veröffentlichungsnummer: WO9118687

(56) Entgegenhaltungen:
- EP-A- 0 287 935
- EP-A- 0 336 254
- US-A- 4 356 981

## Beschreibung

Gegenstand der vorliegenden Erfindung ist ein Verfahren zur Entsorgung von Emballagen, bei dem
1. die Emballagen mittels einer Zerkleinerungsvorrichtung geöffnet und zerkleinert werden,
2. die flüssigen und ggf. feinteiligen festen Restinhaltsstoffe abgetrennt, gesammelt und einer geeigneten Entsorgung zugeführt werden,
3. die ggf.entstehenden Gase durch einen ständigen Luftstrom verdünnt und abgeführt werden und
4. die entleerten und zerkleinerten Emballagen gesammelt werden.

Die vorliegende Erfindung betrifft außerdem eine Vorrichtung zur Durchführung dieses Verfahrens.

Häufig enthalten Emballagen umweltgefährdende Produkte, z.B. leicht brennbare und/oder giftige Flüssigkeiten und/oder Gase. Derartige Behälter können nicht einfach nach Gebrauch wie gewöhnlicher Hausmüll deponiert werden, sondern müssen einer gesonderten Abfallbeseitigung zugeführt werden.
Außerdem stellt das Emballagenmaterial einen wertvollen
Rohstoff dar, der nach Möglichkeit einer Wiederverwertung zugeführt werden sollte. Eine Reinigung derartiger Emballagen und anschließende Wiederverwertung als solche ist aber nur dann wirtschaftlich sinnvoll, wenn eine gewisse Größe der Emballagen (z.B. 200 1-Faß) erreicht ist. Eine Wiederverwertung kleinerer Emballagen durch Rückgewinnung der Rohstoffe ist nur möglich, wenn die in den Behältern enthaltenen flüssigen Restinhaltsstoffe zuvor vollständig entfernt und einer ordnungsgemäßen Entsorgung zugeführt werden.

Ein Verfahren zur Entsorgung von Behältern, welche Aerosole oder Treibmittel, entflammbare Gase oder giftige Chemikalien enthalten, ist beispielsweise in der US-A- 4,356,981 beschrieben. Dort werden die zu entsorgenden Behälter zunächst mit einem Shredder zerstört. Die Restbestandteile fallen anschließend nach unten auf eine Fördereinrichtung mit einem perforierten Förderband. Die flüssigen Restbestandteile tropfen durch die Löcher im Förderband nach unten ab und werden in einer darunter liegenden Wanne aufgefangen und über einen Flüssigkeitsauslaß entleert. Das Förderband ist innerhalb eines im wesentlichen nach außen abgedichteten Gehäuses angeordnet, durch welches eine Luftströmung geleitet wird. Durch diesen Luftstrom werden gasförmige Bestandteile über eine Absaugöffnung mittels eines Unterdruckgebläses kontrolliert abgeführt. Dieses in der US-PS 4,356,981 beschriebene Verfahren ist jedoch nur für eine Vorreinigung der zerkleinerten Emballagen geeignet. So bleibt die Oberseite der auf dem Förderband befindlichen Teile verunreinigt, da nur von der Unterseite der Teile Flüssigkeit abtropfen kann. Hochviskose Stoffe können gar nicht entfernt werden. Für eine Verwertung der Emballagen ist es aufgrund entsprechender gesetzlicher Vorschriften (Abfallgesetze und Wasserschutzgesetze) aber unbedingt erforderlich, daß alle fließ- und tropffähigen Restinhalte vollständig entfernt wurden (vgl. Schriften des Informationskreises der Verwertung entleerter Blechgebinde). Nachteilig bei diesem Verfahren ist außerdem, daß die Porenöffnungen des Förderbandes nach relativ kurzer Zeit verstopfen und daher das Förderband häufig gereinigt werden muß.

Aus der DE-C-37 13 477 ist es weiterhin bekannt, derartige Emballagen dadurch zu entsorgen, daß die Behälter zunächst in einer mit Stickstoff im Überdruck beaufschlagten Zerkleinerungsanlage zerkleinert und die Restbestandteile in einem Abfallcontainer gesammelt werden. Aber auch mit diesem Verfahren ist keine vollständige Entfernung der Restbestandteile vom Emballagenmaterial möglich. Nachteilig bei diesem Verfahren ist ferner, daß es aufgrund des Stickstoff-Überdrucks zu Verlusten der gasförmigen Bestandteile kommt und auch trotz Schutzgasatmosphäre eine gewisse Explosionsgefahr bestehen bleibt.

Schließlich sind beispielsweise aus den Patentschriften US-A- 3,828,976, US-A- 3,303,968, US-A- 3,438,548 und US-A- 3,333,735 verschiedene Vorrichtungen zum Zerkleinern von Aerosol-Dosen bekannt, bei denen durch spezielle Vorkehrungen die Explosionsgefahr durch die beim Zerkleinern der Aerosol-Dosen freiwerdenden gasförmigen Inhaltsstoffe vermieden wird. Wie dagegen fließ- und tropffähige Restinhaltsstoffe vollständig von den Emballagenteilen zu entfernen sind, wird nicht beschrieben.
Der vorliegenden Erfindung liegt somit die Aufgabe zugrunde, ein Verfahren zur Entsorgung von Emballagen zur Verfügung zu stellen, mit dem umweltgefährdende flüssige, pastöse und feste Stoffe (z.B. Farb- und Lackreste) enthaltende Behälter mittels eines möglichst einfachen und wirtschaftlichen Verfahrens aufgearbeitet werden können. Insbesondere sollte durch dieses Verfahren gewährleistet sein, daß die erhaltenen zerkleinerten Behälter vollständig von allen fließ- und tropffähigen sowie gasenden Restinhaltsstoffen befreit sind und so das Behältermaterial einer Wiederverwertung zugeführt werden kann.

Diese Aufgabe wird erfindungsgemäß gelöst durch ein

Verfahren zur Entsorgung von Emballagen, bei dem
1. die Emballagen mittels einer Zerkleinerungsvorrichtung geöffnet und zerkleinert werden,
2. die flüssigen und ggf. feinteiligen festen Restinhaltsstoffe abgetrennt, gesammelt und einer geeigneten Entsorgung zugeführt werden,
3. die ggf. entstehenden Gase durch einen ständigen Luftstrom verdünnt und abgeführt werden und
4. die entleerten und zerkleinerten Emballagenteile gesammelt werden.

Das Verfahren ist dadurch gekennzeichnet, daß die Emballagen im Anschluß an ihre Zerkleinerung durch mindestens eine rotierende Siebtrommel geführt werden und daß die Zerkleinerungsvorrichtung und/oder die Siebtrommel mit einem auf eine Temperatur von 40 bis 150°C, bevorzugt 80 bis 120°C erhitzten Gas oder Gasgemisch beaufschlagt werden.

Zwar ist aus der EP-A1-336 254 eine Einrichtung zur Entsorgung von Treib- und/oder Kältemitteln bekannt, bei der ein auf etwa 40°C erwärmter Umluftstrom in eine Zerkleinerungskammer eingeleitet wird. Die bekannte Einrichtung dient jedoch nicht zur Entsorgung von mit flüssigen Restinhaltsstoffen verunreinigten Emballagen, sondern zur Entsorgung und Rückgewinnung von Treib- und/oder Kältemitteln insbesondere Fluor-Chlor-Kohlenwasserstoffen aus Schaum- und/oder Kunststoffen. Die Erwärmung der Umluft dient zur Abführung der Treib- und/oder Kältemittel in gasförmigem Zustand.

Gegenstand der vorliegenden Erfindung ist auch eine Vorrichtung zur Durchführung dieses Verfahrens.

Das erfindungsgemäße Verfahren weist insbesondere den Vorteil auf, daß sämtliche fließ- und tropffähigen sowie gasenden Restinhaltsstoffe vollständig entfernt werden können.
Dabei können auch alle nicht selbständig abfließenden und abtropfenden Inhaltsstoffe entfernt werden, indem sie zunächst angetrocknet werden und dann durch das Kontaktieren (Reiben) in der Trommel weitgehend abgelöst werden, d.h. daß auch feste Inhaltsstoffe weitgehend entfernt werden können.

Mit dem Verfahren ist eine gefahrlose, einfache und kostengünstige Möglichkeit bereitgestellt worden, auch kleine Emballagen unabhängig von Größe und Formgebung einer Wiederverwertung zugänglich zu machen.

Im folgenden werden nun die erfindungsgemäße Vorrichtung sowie das Verfahren näher erläutert.

Um eine gefahrlose und umweltfreundliche Entsorgung der Emballagen zu gewährleisten, ist die gesamte Vorrichtung vom Einlauf in die Zerkleinerungsanlage bis zum Auslauf aus der Siebtrommel bzw. Paketierpresse gegenüber der Umgebung abgeschlossen. Um die Gefahr von Explosionen während des Betriebs der Anlage zu vermeiden, wird die Luft in der Anlage ständig z.B. mittels eines Saugzuges o.ä. abgesaugt und so ein Unterdruck in der Anlage erzeugt. Der Luftstrom wird dabei so einreguliert, daß die bei der Zerkleinerung der Emballagen und der weiteren Entfernung der Inhaltsstoffe freiwerdenden Gase möglichst schnell abtransportiert werden, so daß ein gefahrloser Betrieb der Anlage ermöglicht wird. Bevorzugt wird der Luftstrom so einreguliert, daß ein mindestens 8-facher Luftaustausch pro Minute in den unter Unterdruck stehenden Teilen der Vorrichtung (Zerkleinerungsvorrichtung und Trommel) gewährleistet ist, um so die Gefahr von Explosionen zu reduzieren. Besonders bevorzugt wird ein wesentlich höherer Luftaustausch von beispielsweise 20-fachem oder noch höherem Luftwechsel pro Minute eingestellt.
Die Abluft der Anlage wird zur ordnungsgemäßen Entsorgung der anfallenden Abgase entweder mit geeigneten Filtern, z.B. Aktivkohlefiltern, gereinigt oder einer Verbrennungsanlage zugeführt. Ist eine Verbrennung der Gase aufgrund ihrer chemischen Zusammensetzung nicht möglich, so kann außer einem Filter auch ein Kondensator mit anschließender Vorrichtung zur fraktionierten Destillation am Ende der Abgasleitung angebracht werden.

Diese Vermeidung von Explosionen durch einen häufigen Luftwechsel bietet gegenüber der Inertisierung der Atmosphäre mit beispielsweise Stickstoffgas den Vorteil, daß die Anlage nicht mit Überdruck, sondern kontinuierlich ohne Schleusensystem mit Unterdruck betrieben wird, wodurch Emissionen vermieden werden.

Zur weiteren Reduzierung der Explosionsgefahr kann ggf. zusätzlich ein aktives Explosionsunterdrückungssystem mit Drucksensoren und einer automatischen Pulverlöschanlage installiert werden. Explosionsklappen sind in jedem Fall vorzusehen. Diese Systeme sind allgemein bekannt und brauchen daher hier nicht näher erläutert werden.
Zur Entsorgung der Emballagen, die entweder zumindest teilweise entleert oder auch noch vollständig gefüllt sein können, werden die Behälter bevorzugt zunächst nach dem Emballagenmaterial, wie Kunststoff, Weißblech, Schwarzblech und Aluminium, vorsortiert. Danach werden sie beispielsweise mittels eines Kübelaufzuges, eines Bandförderers oder mittels anderer geeigneter Aufgabevorrichtungen einer Zerkleinerungsvorrichtung zugeführt.

In der Zerkleinerungsvorrichtung werden die Behälter bevorzugt mittels motorgetriebener langsam laufender Schneidwerkzeuge, beispielsweise mittels Schneidwalzen, geöffnet und zerkleinert. Dadurch wird die zugängliche Fläche der Emballagen vergrößert und fließfähige Reste können lageunabhängig abtropfen. Die Emballagen werden dabei üblicherweise streifenförmig zerkleinert, wobei die Streifenbreite im allgemeinen zwischen 20 und 50 mm liegt. Zerkleinerungsvorrichtungen sind an sich bekannt und beispielsweise in den Veröffentlichungen DE-C- 3,713,477 und US-A- 4,356,981 beschrieben. Geeignet sind auch alle sonstigen bekannten Zerkleinerungsvorrichtungen. Die jeweilige Zerkleinerungsvorrichtung ist selbstverständlich wie üblich an die Art und Größe der zu zerkleinernden Emballagen anzupassen. Weiterhin ist es auch möglich, mehrere Zerkleinerungsvorrichtungen kaskadenförmig zu kombinieren, um so beispielsweise die Emballagen zunächst vorzuzerkleinern und dann weiter zu zerkleinern.
Der Zerkleinerungsvorrichtung nachgeschaltet ist mindestens eine rotierende Siebtrommel, die bevorzugt unterhalb der Zerkleinerungsvorrichtung und schräg nach unten weisend angeordnet ist und in die die Emballagen in Schnitzelform beispielsweise über eine Schurre gelangen. Die Verbindung zwischen Zerkleinerungsvorrichtung und Siebtrommel ist gasdicht auszuführen. Geeignete Siebtrommeln weisen im allgemeinen einen Durchmesser zwischen 1 und 3 m auf, wobei der jeweilige Durchmesser abhängig ist von der Größe des Schneidrahmens und der Schurre. Es können auch wesentlich größere oder wesentlich kleinere Siebtrommeln eingesetzt werden. Zur Reinigung der Löcher der Siebtrommel kann diese vorteilhafterweise mit einer Stachelwalze kombiniert werden.
In der Siebtrommel wird durch die Rotation der Trommel die selbsttätige Abreinigung der zerkleinerten Emballagen unterstützt. Die Umdrehungszahl der Siebtrommel ist dabei einerseits nicht zu hoch zu wählen, so daß das Abtropfen der fließfähigen Reste gewährleistet ist. Geeignet sind hierfür im allgemeinen Umdrehungszahlen von < 5 Umdrehungen/min. Andererseits muß die Umdrehungszahl hoch genug sein, um eine Abreinigung der getrockneten festen Restinhaltsstoffe durch Reiben in der Trommel zu gewährleisten. Weiterhin ist die Rotationsgeschwindigkeit abhängig vom Füllgrad. Üblicherweise sind hierfür Umdrehungszahlen von > 2 Umdrehungen/min. geeignet. Aufgrund dieser unterschiedlichen Anforderungen an die Rotationsgeschwindigkeit der Siebtrommel bestehen bevorzugte Ausführungsformen in der Kombination von mindestens zwei Siebtrommeln mit unterschiedlicher Rotationsgeschwindigkeit oder in der Abstufung der Trommeldurchmesser mit möglicherweise auch eckigem Querschnitt.

Werden mehrere Siebtrommeln hintereinander geschaltet, so dreht sich die erste Siebtrommel direkt hinter der Zerkleinerungsvorrichtung langsam, bevorzugt mit einer Geschwindigkeit von kleiner gleich 5 Umdrehungen/min , während sich die zweite Siebtrommel schneller dreht, bevorzugt mit einer Geschwindigkeit von größer gleich 2 Umdrehungen/min.
Durch Stufung der Trommeldurchmesser ist der gleiche Effekt erreichbar.
Es ist erfindungswesentlich, daß die Siebtrommel mit einem erhitzten Gas oder Gasgemisch beaufschlagt wird. Das Gas oder Gasgemisch weist im allgemeinen Temperaturen zwischen 40 und 150°C, bevorzugt zwischen 80 und 120°C auf, wobei die Temperatur des Gases oder Gasgemisches immer unterhalb der Zündtemperatur der Inhaltsstoffe liegt. Als erhitztes Gasgemisch ist beispielsweise die Abluft einer Verbrennungsanlage einsetzbar. Durch die Beaufschlagung mit Heißluft wird dabei zunächst eine Verbesserung der Fließfähigkeit der flüssigen Reststoffe erzielt. In einer zweiten Phase erfolgt eine Trocknung und ein vollständiges Ausgasen der Reststoffe, so daß Anhaftungen abplatzen können.

Die Beaufschlagung mit Heißluft erfolgt im allgemeinen im Bereich des ersten Drittels der Siebtrommel. Vorteilhafterweise kann aber auch bereits die Zerkleinerungsvorrichtung mit Heißluft beaufschlagt werden. Daneben ist es selbstverständlich auch möglich, die Heißluft im Bereich zwischen Zerkleinerungsvorrichtung und Siebtrommel einzuspeisen.
Sowohl die in der Zerkleinerungsvorrichtung als auch in der Siebtrommel von den Emballagenteilen abgetrennte Flüssigkeit wird z.B. in einer Wanne aufgefangen oder mit einer Dickstoffpumpe o.ä. einer geeigneten Entsorgung, beispielsweise einer Verbrennung, zugeführt.

Bei hohem Flüssigkeitsgehalt der Behälter ist es auch möglich, beispielsweise zwischen Arbeitsraum der Zerkleinerungsvorrichtung und dem Flüssigfraktionierer (z.B. vor der ersten Siebtrommel) ein flüssigkeitsbindendes Mittel, wie z.B. Sägespäne, einzudüsen.

Alternativ dazu, in Abhängigkeit von den Inhaltsstoffen kann es in einigen Fällen vorteilhaft sein, in die Siebtrommel und/oder den Arbeitsraum der Zerkleinerungsvorrichtung ein oder mehrere organische Lösungsmittel einzudüsen. Vorteilhafter können hierzu zur Einsparung von Kosten bereits gebrauchte bzw. verunreinigte Lösungsmittel, z.B. Waschlösungen o. dgl. eingesetzt werden, die ohnehin entsorgt werden müßten. Die Lösungsmittel werden dann zusammen mit den gelösten flüssigen Restinhaltsstoffen, wie bereits erwähnt, einer gezielten Entsorgung zugeführt.

Die zerkleinerten und gereinigten Emballagenteile können direkt hinter der Siebtrommel gesammelt und einer Wiederverwertung zugeführt werden. Zur Reduzierung des Transportvolumens der zerkleinerten Teile ist es jedoch bevorzugt, die Teile in einer der Siebtrommel nachgeschalteten Presse zu verdichten und erst dann in Containern zu sammeln und einer Wiederverwertung zuzuführen.

Die in Rede stehende Vorrichtung zur Entsorgung von Emballagen wird bevorzugt mit einer Sondermüll-Verbrennungsanlage kombiniert. Dies weist außer der einfachen Entsorgung der Abluft und der anfallenden Flüssigkeiten die weiteren Vorteile auf, daß sehr hohe Luftwechsel in der Anlage von beispielsweise 20-fachem Luftwechsel/min leicht zu realisieren sind und der Aufwand für Gebläse und Filter entfällt.
Außerdem kann die Abwärme der Verbrennungsanlage für die Heißlufteinspeisung genutzt werden.

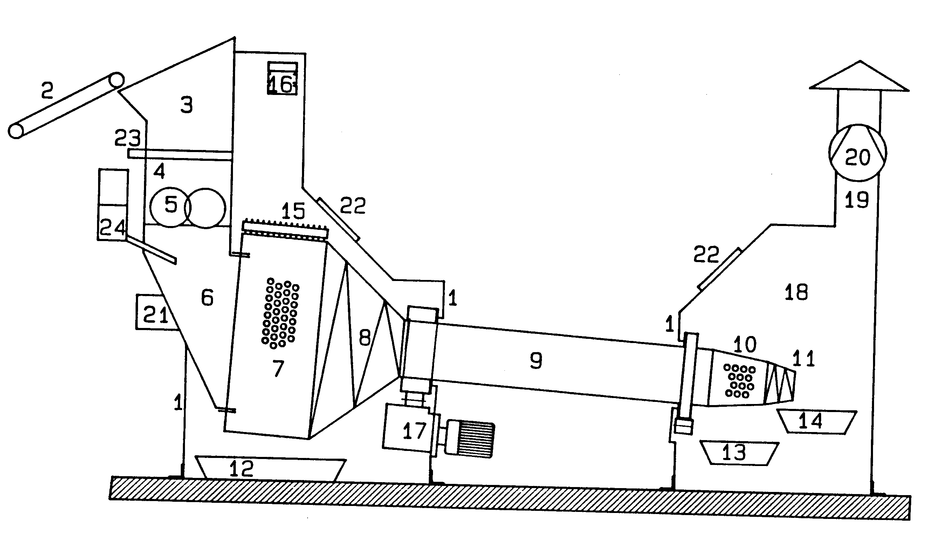

Ein Ausführungsbeispiel der Erfindung wird nachfolgend anhand der Zeichnung näher erläutert. Die Figur zeigt eine Vorrichtung zur Entsorgung von Emballagen in schematischer Darstellung.
Dargestellt sind die Einhausung 1, der Bandförderer 2, der Einfülltrichter 3, die Zerkleinerungsvorrichtung mit Arbeitsraum 4 und Schneidwalzen 5, die Schurre 6, die Siebtrommel mit abgestuftem Trommeldurchmesser, bestehend aus einem Flüssigkeitsfraktionierteil 7, einer integrierten Förderschnecke 8, einem Kontaktierteil 9, einem Teil 10 zur Abtrennung des Blechs von den festen Rückständen und einem Blechaustrag 11, der Sammelbehälter 12 für Flüssigkeiten, der Container 13 für feste Rückstände und der Sammelbehälter 14 für die gereinigten Emballagenteile. Zur Durchführung des Verfahrens werden die in einem Container gesammelten Emballagen aus einem einheitlichen Emballagenmaterial, z.B. Weißblech, mittels eines Bandförderers 2 dem Fülltrichter 3 zugeführt. Von dort gelangen die Emballagen in den Arbeitsraum 4, wo sie mit Hilfe von Schneidwalzen 5 geöffnet und zerkleinert werden. Die zerkleinerten Emballagenteile gelangen über eine Schurre 6 in den als Siebtrommel ausgebildeten Fraktionierteil 7 der Trommel. Diese Siebtrommel 7 weist einen Durchmesser von ca. 3 m und eine Länge von ca. 1,5 m auf. Die Länge und der Durchmesser dieser Siebtrommel 7 sind dabei so groß zu wählen, daß die Schütthöhe nicht zu hoch ist, um ein leichtes Abtropfen der Flüssigkeiten zu gewährleisten. Durch die Rotation der Siebtrommel 7 können fließfähige Reste lageunabhängig abtropfen. Diese fließfähigen Reste werden in dem Container 12 gesammelt. Um ein Zusetzen der Löcher der Siebtrommel zu verhindern, ist oberhalb der Siebtrommel eine Stachelwalze 15 angeordnet.
Die von den fließfähigen Resten befreiten Emballagenteile gelangen dann von der Siebtrommel 7 mittels eines Übergangs 8 mit inegrierter Förderschnecke in den Kontaktierteil 9 der Trommel. Um die Heißverluste klein zu halten und um ein intensives Kontaktieren des Materials zu erreichen, weist der Kontaktierteil 9 der Trommel einen geringeren Durchmesser auf als der Fraktionierteil 7 der Trommel. So hat der Kontaktierteil 9 einen Durchmesser von nur ca. 1 m bei einer Länge von ca. 7 m. Durch die Rotation der Trommel wird in diesem Teil 9 ein intensives Reiben des Materials und somit eine trockene Abreinigung des Materials erreicht. Verstärkt werden kann dies durch eine eckige, bevorzugt sechseckige Ausgestaltung dieses Trommelteils. Der gleiche Effekt ist bei einem runden Querschnitt der Trommel auch durch den Einbau von Stegen erzielbar.
Die feinteiligen festen Reststoffe werden im nachfolgenden, wiederum als Siebtrommel ausgebildeten Teil 10 der Trommel von den Emballagenteilen abgetrennt und im Container 13 gesammelt. Die gereinigten Emballagenteile gelangen über einen Blechaustrag 11 mit integrierter Förderschnecke in den Container 14, von wo sie ggf. einer Paketierpresse zugeführt werden können.

Zur Verbesserung der Reinigungswirkung wird aus dem Fülltrichter 3 Kaltluft angesaugt und über den Wärmetauscher 16 aufgeheizt. Diese auf eine Temperatur zwischen 80 und 120°C erhitzte Luft bewirkt dabei zunächst eine Verbesserung der Fließfähigkeit der flüssigen Reststoffe und somit eine bessere Reinigung in der Siebtrommel 7. In einer zweiten Phase erfolgt eine Trocknung und ein vollständiges Ausgasen der Reststoffe, so daß Anhaftungen abplatzen können. Um ein Vorbeiströmen der Heißluft am Kontaktierteil 9 zu unterbinden, ist die Einhausung 1 zweiteilig ausgeführt. Die Abdichtung erfolgt jeweils an den Laufringen der Trommellager 17. Somit wird ein unkontrolliertes Entweichen von Emissionen verhindert. Aus dem gleichen Grund befinden sich die Sammelbehälter 12, 13 und 14 innerhalb der Einhausung, die aus den Siebtrommelteilen 7 und 10 sowie dem Blechaustrag 11 beschickt werden. Das Übergangsteil 8 mit integrierter Förderschnecke ist vorgesehen, um einen möglichst kleinen Querschnitt des Kontaktierteils und somit eine möglichst wirkungsvolle Nutzung des Heißluftstromes zu erreichen. Zur Verringerung der Explosionsgefahr wird in dem Arbeitsraum 4 der Zerkleinerungsvorrichtung, der Schurre 6, der Siebtrommel mit Flüssigkeitsfraktionierer 7, Übergang 8, Kontaktierteil 9, Trommelteil 10 und Blechaustrag 11 über eine Esse 18 und eine Abgasleitung 19 mit Hilfe eines Gebläses 20 so ein Luftstrom eingestellt, daß ein mindestens 8-facher Luftwechsel/min in der Anlage gewährleistet ist. Die Abluft wird einer Verbrennungsanlage zugeführt. Zusätzlich wird ein aktives Explosionsunterdrückungssystem 21 mit Drucksensoren und Pulverlöschsystem installiert. Die gesamte Einhausung 1 der Anlage ist oberseitig mit Explosionsklappen 22 versehen. Zusätzlich ist oberhalb des Arbeitsraums 4 der Zerkleinerungsvorrichtung ein Absperrschieber 23 installiert.

Bei hohem Flüssigkeitsgehalt kann zusätzlich noch über die Vorrichtung 24 ein flüssigkeitsbindenden Mittel, wie z.B. Sägespäne, eingedüst werden.

## Patentansprüche

1. Verfahren zur Entsorgung von Emballagen, bei dem
1. die Emballagen mittels einer Zerkleinerungsvorrichtung (4, 5) geöffnet und zerkleinert werden,
2. die flüssigen und ggf. feinteiligen festen Restinhaltsstoffe abgetrennt, gesammelt und einer geeigneten Entsorgung zugeführt werden,
3. die ggf. entstehenden Gase durch einen ständigen Luftstrom verdünnt und abgeführt werden und
4. die entleerten und zerkleinerten Emballagen gesammelt werden,
dadurch gekennzeichnet, daß die Emballagen im Anschluß an ihre Zerkleinerung durch mindestens eine rotierende Siebtrommel (7) geführt werden und daß die Zerkleinerungsvorrichtung und/oder die Siebtrommel mit einem auf eine Temperatur von 40 bis 150°C, bevorzugt 80 bis 120°C erhitzten Gas oder Gasgemisch beaufschlagt werden.

2. Verfahren nach Anspruch 1, dadurch gekennzeichnet, daß zusätzlich zwischen der Zerkleinerungsvorrichtung (4, 5) und dem Ende der Siebtrommel (7) ein flüssigkeitsbindendes Mittel eingedüst wird.

3. Verfahren nach Anspruch 1 oder 2, dadurch gekennzeichnet, daß in die Zerkleinerungsvorrichtung (4, 5) und/- oder die Siebtrommel (7) mindestens ein zusätzliches Lösungsmittel eingespeist wird.

4. Verfahren nach einem der Ansprüche 1 bis 3, dadurch gekennzeichnet, daß die Emballagen entsprechend der Rohstoffbasis des Emballagenmaterials vorsortiert werden, ehe sie der Entsorgung zugeführt werden.

5. Verfahren nach einem der Ansprüche 1 bis 4, dadurch gekennzeichnet, daß die zerkleinerten Emballagen im Anschluß an die Siebtrommel (7) durch eine Presse geführt werden.

6. Vorrichtung zur Entsorgung von Emballagen, enthaltend
1.) eine Zerkleinerungsvorrichtung (4, 5) zum Öffnen und Zerkleinern der Emballagen,
2.) eine Vorrichtung (20) zur Erzeugung eines ständigen Luftstroms, durch den ggf. entstehende Gase verdünnt und abgeführt werden,
3.) eine Vorrichtung zum Abtrennen der flüssigen und ggf. feinteiligen festen Restinhaltsstoffe vom Emballagenmaterial,
4.) einen Sammelbehälter für die flüssigen und ggf. feinteiligen festen Restinhaltsstoffe und
5.) einen Sammelbehälter für die zerkleinerten und gereinigten Emballagenteile
dadurch gekennzeichnet, daß die Vorrichtung
I.) zum Abtrennen der flüssigen und ggf. feinteiligen festen Restinhaltsstoffe mindestens eine rotierbare Siebtrommel (7) und
II.) zusätzlich eine Vorrichtung (16) aufweist, welche dazu geeignet ist, die Zerkleinerungsvorrichtung und/oder die Siebtrommel mit auf eine Temperatur von 40 bis 150°C, bevorzugt 80 bis 120°C erhitzten Heißluft oder erhitztem Gas zu beaufschlagen.

7. Vorrichtung nach Anspruch 6, dadurch gekennzeichnet, daß die Siebtrommel abgestufte Trommeldurchmesser aufweist.

8. Vorrichtung nach Anspruch 6 oder 7, dadurch gekennzeichnet, daß zwischen der Zerkleinerungsvorrichtung und dem Ende der Siebtrommel eine Vorrichtung (24) zum Eindüsen eines flüssigkeitsbindenden Mittel angeordnet ist.

9. Vorrichtung nach einem der Ansprüche 6 bis 8, dadurch gekennzeichnet, daß sie eine zusätzliche Vorrichtung zur Einspeisung mindestens eines organischen Lösungsmittels in die Zerkleinerungsvorrichtung und/oder in die Siebtrommel aufweist.

10. Vorrichtung nach einem der Ansprüche 6 bis 9, dadurch gekennzeichnet, daß sie eine zusätzliche Vorrichtung zum Sortieren der zu entsorgenden Emballagen nach der Rohstoffbasis des Emballagenmaterials aufweist.

11. Vorrichtung nach einem der Ansprüche 6 bis 10, dadurch gekennzeichnet, daß sie eine Presse für die zerkleinerten Emballagenteile aufweist.

12. Vorrichtung nach einem der Ansprüche 6 bis 11, dadurch gekennzeichnet, daß sie eine solche Vorrichtung zur Erzeugung eines Luftstromes aufweist, daß ein mindestens 8-facher Luftwechsel/min. gewährleistet ist.

## Claims

1. Process for disposing of packing receptacles, in which
1. the packing receptacles are opened and reduced in size by means of a size-reduction apparatus (4,5),
2. the liquid and any fine-particled solid residual contents are separated, collected and passed on for a suitable disposal,
3. any gases produced are rarefied and carried away by a constant air stream and
4. the emptied and size-reduced packing receptacles are collected,
characterised in that, following their size-reduction, the packing receptacles are passed through at least one rotating screening drum (7) and in that a gas or gas mixture heated to a temperature of from 40 to 150°C, preferably from 80 to 120°C, is admitted to the size-reduction apparatus and/or the screening drum.

2. Process according to Claim 1, characterised in that a liquid-binding medium is additionally injected between the size-reduction apparatus (4,5) and the end of the screening drum (7).

3. Process according to Claim 1 or 2, characterised in that at least one additional solvent is fed into the size-reduction apparatus (4,5) and/or the screening drum (7).

4. Process according to one of Claims 1 to 3, characterised in that the packing receptacles are presorted according to the raw material base of the packing receptacle material before they are passed on for disposal.

5. Process according to one of Claims 1 to 4, characterised in that, following the screening drum (7), the size-reduced packing receptacles are passed through a press.

6. Apparatus for disposing of packing receptacles, comprising
1.) a size-reduction apparatus (4,5) for opening and reducing the packing receptacles in size,
2.) an apparatus (20) for generating a constant air stream, by which any gases produced are rarefied and carried away,
3.) an apparatus for separating the liquid and any fine-particled solid residual contents from the packing receptacle material,
4.) a collecting container for the liquid and any fine-particled solid residual contents and
5.) a collecting container for the size-reduced and cleaned packing receptacle parts
characterised in that the apparatus has
I.) at least one rotatable screening drum (7) for separating the liquid and any fine-particled solid residual contents and
II.) in addition an apparatus (16) which is suitable for admitting hot air or gas heated to a temperature of from 40 to 150°C, preferably from 80 to 120°C, to the size-reduction apparatus and/or the screening drum.

7. Apparatus according to Claim 6, characterised in that the screening drum has graduated drum diameters.

8. Apparatus according to Claim 6 or 7, characterised in that an apparatus (24) for injecting a liquid-binding medium is arranged between the size-reduction apparatus and the end of the screening drum.

9. Apparatus according to one of Claims 6 to 8, characterised in that it has an additional apparatus for feeding at least one organic solvent into the size-reduction apparatus and/or into the screening drum.

10. Apparatus according to one of Claims 6 to 9, characterised in that it has an additional apparatus for sorting the packing receptacles for disposal according to the raw material base of the packing receptacle material.

11. Apparatus according to one of Claims 6 to 10, characterised in that it has a press for the size-reduced packing receptacle parts.

12. Apparatus according to one of Claims 6 to 11, characterised in that it has an apparatus for generating an air stream such that an at least 8-fold air exchange/min is ensured.

## Revendications

1. Procédé d'élimination d'emballages, dans lequel
1. les emballages sont ouverts et fragmentés au moyen d'un dispositif de fragmentation (4, 5),
2. les substances résiduaires liquides et le cas échéant solides à fines particules sont séparées, recueillies, et amenées à une installation d'élimination appropriée,
3. les gaz éventuels sont dilués et évacués par un flux d'air constant et
4. les emballages vidés et fragmentés sont recueillis,
caractérisé par le fait que les emballages, après avoir été fragmentés, passent par au moins un tambour cribleur rotatif (7) et par le fait que le dispositif de fragmentation et/ou le tambour cribleur sont alimentés par un gaz ou un mélange de gaz chauffé à une température de 40 à 150°C, de préférence de 80 à 120°C.

2. Procédé selon la revendication 1, caractérisé par le fait qu'en outre, un agent agglomérant les liquides est introduit entre le dispositif de fragmentation (4, 5) et l'extrémité du tambour cribleur (7).

3. Procédé selon la revendication 1 ou 2, caractérisé par le fait qu'au moins un solvant supplémentaire est injecté dans le dispositif de fragmentation (4, 5) et/ou dans le tambour cribleur (7).

4. Procédé selon l'une quelconque des revendications 1 à 3, caractérisé par le fait que les emballages sont d'abord triés selon la matière première du matériau d'emballage, avant d'être amenés à l'installation d'élimination.

5. Procédé selon l'une quelconque des revendications 1 à 4, caractérisé par le fait que les emballages fragmentés passent par une presse située après le tambour cribleur (7).

6. Dispositif pour l'élimination d'emballages, comprenant
1.) un dispositif de fragmentation (4, 5) pour ouvrir et fragmenter les emballages,
2.) un dispositif (20) pour la production d'un flux d'air constant, par lequel les gaz éventuels sont dilués et évacués,
3.) un dispositif pour la séparation des substances résiduaires liquides et le cas échéant solides à fines particules du matériau d'emballage,
4.) un récipient de récupération des substances résiduaires liquides et le cas échéant solides à fines particules et
5.) un récipient de récupération des morceaux d'emballages fragmentés et nettoyés
caractérisé par le fait que le dispositif présente
I.) pour la séparation des substances résiduaires liquides et le cas échéant solides à fines particules, au moins un tambour cribleur (7) et
II.) en outre un dispositif (16) destiné à alimenter le dispositif de fragmentation et/ou le tambour cribleur par de l'air chauffé ou du gaz chauffé à une température de 40 à 150°C, de préférence de 80 à 120°C.

7. Dispositif selon la revendication 6, caractérisé par le fait que le tambour cribleur présente un diamètre de tambour étagé.

8. Dispositif selon la revendication 6 ou 7, caractérisé par le fait qu'un dispositif (24) pour l'introduction d'un agent agglomérant les liquides est disposé entre le dispositif de fragmentation et l'extrémité du tambour cribleur.

9. Dispositif selon l'une quelconque des revendications 6 à 8, caractérisé par le fait qu'il présente un dispositif supplémentaire pour l'injection d'au moins un solvant organique dans le dispositif de fragmentation et/ou dans le tambour cribleur.

10. Dispositif selon l'une quelconque des revendications 6 à 9, caractérisé en ce qu'il présente un dispositif supplémentaire pour trier les emballages à éliminer selon la matière première du matériau d'emballage.

11. Dispositif selon l'une quelconque des revendications 6 à 10, caractérisé par le fait qu'il présente une presse pour les morceaux d'emballages fragmentés.

12. Dispositif selon l'une quelconque des revendications 6 à 11, caractérisé par le fait qu'il présente un dispositif de production d'un flux d'air tel qu'au moins 8 changements d'air/min sont assurés.
